# FASCICULE DE BREVET EUROPEEN

(11) **EP 4 232 235 B1**
(45) Date de publication et mention de la délivrance du brevet: **17.07.2024**
(21) Numéro de dépôt: 21811114.4
(22) Date de dépôt: 20.10.2021
(51) Int. Cl.: B23P 15/00, B21D 53/92, B21D 53/84, B21D 26/031, B21D 53/18, F02C 7/04, B64D 33/02, B64F 5/10

(54) **FABRICATION DE SECTEURS ANNULAIRES POUR LA RÉALISATION D'UNE LÈVRE D'ENTRÉE D'AIR**
HERSTELLUNG RINGFÖRMIGER SEKTOREN ZUR HERSTELLUNG EINER LUFTEINLASSLIPPE
MANUFACTURE OF ANNULAR SECTORS FOR PRODUCING AN AIR INTAKE LIP

(30) Priorité: 21.10.2020 FR 2010781
(43) Date de publication de la demande: 30.08.2023
(73) Titulaire: Safran Nacelles, 76700 Gonfreville-l'Orcher (FR)
(72) Inventeur: QUENU, Fabienne, 77550 MOISSY-CRAMAYEL (FR); DUTOT, Vincent, 77550 MOISSY-CRAMAYEL (FR); LEROYER, Bertrand, Pierre, Martin, 77550 MOISSY-CRAMAYEL (FR); TAILLARD, François, 77550 MOISSY-CRAMAYEL (FR)
(74) Mandataire: Cabinet Beau de Loménie
(86) Numéro de dépôt international: PCT/FR2021/051832
(87) Numéro de publication internationale: WO 2022/084628

(56) Documents cités:
- EP-A1- 3 406 750
- WO-A1-2012/116999
- CN-A- 110 899 501
- FR-A1- 2 943 317
- US-A1- 2004 050 908
- US-A1- 2018 127 108
- US-A1- 2019 099 835

## Description

### Domaine Technique

La présente invention concerne la fabrication de lèvres d'entrée d'air de nacelles de moteur aéronautique.

### Technique antérieure

Les nacelles de moteurs aéronautiques comportent un capot d'entrée d'air prolongé à l'avant par une lèvre présentant en section la forme d'un U ouvert vers l'arrière. La lèvre d'entrée d'air a notamment pour fonction d'assurer l'écoulement aérodynamique de l'air, d'une part, vers le canal de soufflante et, d'autre part, vers l'extérieur de la nacelle.

Les lèvres d'entrée d'air de grandes dimensions (diamètre supérieur au mètre) sont généralement fabriquées à partir de plusieurs secteurs annulaires individuels assemblés entre eux ultérieurement cela permet notamment de faciliter le transport et la réparation des lèvres d'entrée d'air.

Les secteurs annulaires sont fabriqués individuellement par formage de tôles et plus spécifiquement par tournage centrifuge (encore appelé « spin forming »). L'assemblage des secteurs est réalisé avec des éclisses placées à l'intérieur des secteurs. Chaque éclisse est alors fixée par vissage ou rivetage depuis l'extérieur.

Le document CN 110 899 501 A décrit un procédé de fabrication de secteurs annulaires d'une lèvre d'entrée d'air comprenant :
- le placement d'une ébauche de forme de révolution en regard d'une surface tridimensionnelle de formage d'une matrice d'un outillage d'hydroformage,
- le formage d'une préforme de lèvre d'entrée d'air en une seule pièce par hydroformage de l'ébauche de forme de révolution sur la surface tridimensionnelle de la matrice, la préforme de lèvre d'entrée d'air présentant en section une forme de U,
- la réalisation d'une pluralité de découpes dans la préforme de lèvre d'entrée d'air de manière à diviser ladite préforme en une pluralité de secteurs annulaires.

La fabrication de lèvres d'entrée d'air par assemblage de secteurs annulaires présente toutefois des inconvénients. En particulier, l'assemblage des secteurs entraîne des problèmes d'ajustement qui peuvent rendre difficile le respect des tolérances géométriques. Des décalages radiaux et/ou axiaux peuvent se produire entre des secteurs annulaires adjacents, ce qui affecte le profil aérodynamique de la lèvre d'entrée d'air.

Or, il existe un besoin pour la fabrication de lèvres d'entrée d'air par assemblage de secteurs annulaires permettant d'assurer un ajustement précis entre les secteurs annulaires.

### Exposé de l'invention

A cet effet, l'invention propose un procédé de fabrication de secteurs annulaires d'une lèvre d'entrée d'air comprenant :
- le placement d'une ébauche de forme de révolution en regard d'une surface tridimensionnelle de formage d'une matrice d'un outillage d'hydroformage, la surface tridimensionnelle comprenant au moins deux empreintes de soyage espacées l'une de l'autre suivant une direction circonférentielle,
- le formage d'une préforme de lèvre d'entrée d'air en une seule pièce par hydroformage de l'ébauche de forme de révolution sur la surface tridimensionnelle de la matrice, la préforme de lèvre d'entrée d'air présentant en section une forme de U et comprenant une pluralité de portions en créneau chacune délimitée par une empreinte de soyage,
- la réalisation d'une pluralité de découpes dans la préforme de lèvre d'entrée d'air de manière à diviser ladite préforme en une pluralité de secteurs annulaires, chaque découpe comprenant le retrait d'une portion sacrificielle au niveau d'une portion en créneau de manière à former deux bords d'assemblage adjacents avec un des deux bords d'assemblage adjacents comportant un soyage.

Ainsi, en réalisant les secteurs annulaires à partir d'une préforme en une seule pièce, on assure une très bonne correspondance géométrique et dimensionnelle entre les secteurs annulaires, ce qui permet un assemblage précis entre les secteurs sans problème d'ajustement. La présence d'un soyage sur un des bords d'assemblage entre deux secteurs annulaires adjacents simplifie et facilite l'assemblage des secteurs entre eux notamment car il n'est plus nécessaire d'utiliser des éclisses. On conserve ainsi les avantages de la réalisation d'une lèvre d'entrée d'air à partir de secteurs annulaires, notamment en termes de transport et réparation, tout en éliminant les problèmes d'ajustement entre les secteurs lors de la réalisation de la lèvre d'entrée d'air.

Selon une caractéristique particulière du procédé de l'invention, la surface tridimensionnelle de formage présente une forme d'ellipse ayant un diamètre déterminé en fonction de la forme finale de la lèvre d'entrée d'air. La géométrie et les dimensions de la surface tridimensionnelle de la matrice sont ainsi adaptées en fonction de la géométrie et des dimensions de la lèvre d'entrée d'air finale que l'on souhaite obtenir notamment par la prise en compte du retrait des portions sacrificielle et du chevauchement des bords adjacents des secteurs assemblés. Selon une autre caractéristique particulière du procédé de l'invention, l'ébauche de forme de révolution est formée d'une pluralité de parties de tôle assemblées entre elles par des cordons de soudure, l'ébauche de forme de révolution étant placée en regard de la surface tridimensionnelle de formage de la matrice de manière à ce que la position d'au moins une partie des cordons de soudure coïncide avec la position de portions sacrificielles. On obtient ainsi des secteurs annulaires dépourvus de cordons de soudure, ce qui permet d'obtenir après assemblage une lèvre d'entrée d'air avec un profil aérodynamique régulier.

L'invention a également pour objet un procédé de fabrication d'une lèvre d'entrée d'air comprenant la réalisation de secteurs annulaires de lèvre d'entrée d'air selon l'invention et l'assemblage des secteurs par chevauchement entre les bords adjacents d'assemblage et fixation desdits bords d'assemblage adjacents entre eux de manière à obtenir une lèvre d'entrée d'air. On obtient ainsi après assemblage des secteurs annulaires une lèvre d'entrée d'air présentant un profil aérodynamique améliorée par rapport à une lèvre d'entrée d'air fabriquée par assemblage de secteurs annulaires réalisés individuellement, c'est-à-dire non extraits initialement d'une même pièce.

Selon une caractéristique particulière du procédé de l'invention, la fixation des bords d'assemblage adjacents est réalisée avec des organes de liaison démontables. Cela permet de faciliter la réparation de la lèvre, en particulier le remplacement d'un ou plusieurs secteurs endommagés.

### Brève description des dessins

[Fig. 1] La figure 1 est un ordinogramme montrant les étapes d'un procédé de fabrication de secteurs annulaires d'une lèvre d'entrée d'air conformément à un mode de réalisation de l'invention,
[Fig. 2] La figure 2 est une vue schématique d'une plaque de tôle,
[Fig. 3] La figure 3 est une schématique d'un anneau obtenu après découpe de la plaque de tôle de la figure 1,
[Fig. 4] La figure 4 est une vue schématique en perspective d'un tronc de cône obtenu à partir de l'anneau de la figure 3,
[Fig. 5] La figure 5 est une vue schématique en perspective d'une ébauche de lèvre d'entrée d'air obtenue à partir du tronc de cône de la figure 4,
[Fig. 6] La figure 6 est une vue schématique en perspective montrant le placement de l'ébauche de la figure 5 dans un outillage d'hydroformage,
[Fig. 7] La figure 7 est une vue schématique en coupe de l'outillage d'hydroformage de la figure 6 une fois fermé et en fonctionnement,
[Fig. 8] La figure 8 est une vue schématique en perspective d'une préforme de lèvre d'entrée d'air après hydroformage de l'ébauche de la figure 5 dans l'outillage d'hydroformage des figures 6 et 7,
[Fig. 9] La figure 9 est une vue en perspective montrant la découpe de secteurs annulaires de lèvre d'entrée d'air à partir de la préforme de lèvre de la figure 8,
[Fig. 10] La figure 10 montre les dimensions d'une préforme d'entrée d'air par rapport aux dimensions d'une lèvre d'entrée d'air finale,
[Fig. 11] La figure 11 est une vue schématique en perspective d'une lèvre d'entrée d'air obtenue après assemblage des secteurs annulaires de la figure 9,
[Fig. 12A] La figure 12A est une vue schématique montrant deux bords d'assemblage de deux secteurs annulaires avec jeu résiduel,
[Fig. 12B] La figure 12B est une vue schématique montrant deux bords d'assemblage de deux secteurs annulaires avec jeu résiduel.

### Description des modes de réalisation

L'invention s'applique d'une manière générale à la réalisation de lèvres d'entrée d'air pour nacelles de moteur aéronautique.

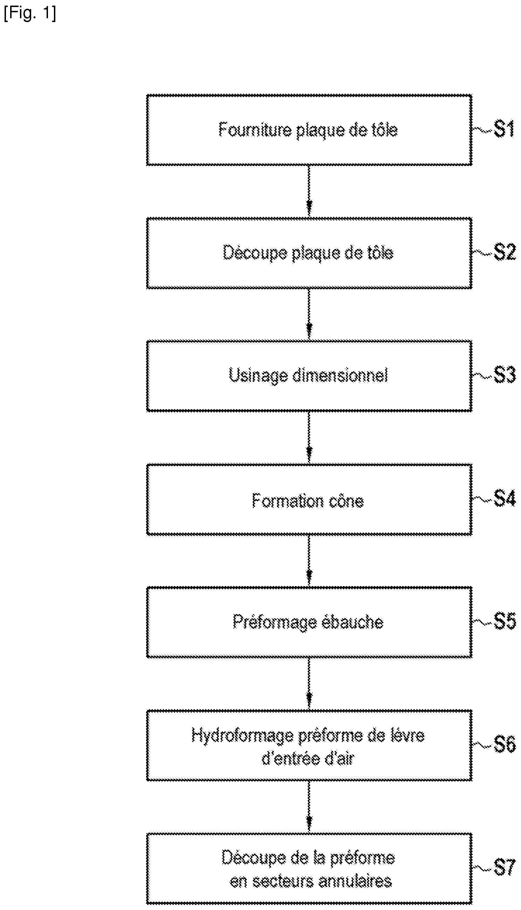

La figure 1 décrit les étapes d'un procédé de fabrication de secteurs annulaires conforme à l'invention pour la réalisation d'une lèvre d'entrée d'air.

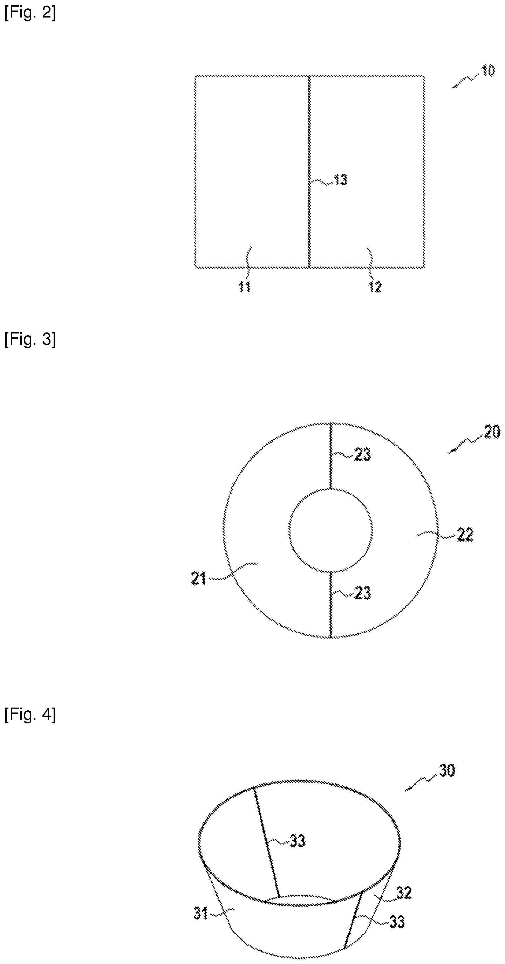

Comme illustrée sur la figure 2, le procédé débute par la fourniture d'une plaque de tôle 10, par exemple en alliage d'aluminium (étape S1). Dans l'exemple décrit ici, la tôle 10 est obtenue par assemblage de deux plaques de tôle 11 et 12 fixées entre elles par un cordon de soudure 13. Cela permet d'obtenir des plaques de tôle de grandes dimensions à partir de plaques de tôles unitaires de plus petites dimensions. Selon les dimensions de la lèvre finale, il est également possible d'utiliser une seule plaque de tôle.

On découpe ensuite la plaque de tôle 10 pour former un anneau 20 illustré sur la figure 3 (étape S2). L'anneau 20 comprend deux parties de tôle 21 et 22 correspondant respectivement aux plaques de tôle 11 et 12 reliées entre elles par deux cordons de soudure 23 diamétralement opposés et résultants du cordon de soudure 13 présent sur la plaque de tôle 10.

L'anneau 20 est usiné mécaniquement en épaisseur de manière à obtenir une épaisseur de tôle constante après mise en forme (étape S3).

Un tronc de cône 30 illustré sur la figure 4 est ensuite formé à partir de l'anneau 20 par la technique connue du roulage de tôle (étape S4). Le tronc de cône 30 comprend deux parties 31 et 32 correspondant respectivement aux parties 21 et 22 de l'anneau 20 reliées entre elles par deux cordons de soudure 33 diamétralement opposés et correspondants aux cordons de soudure 23 présents sur l'anneau 20.

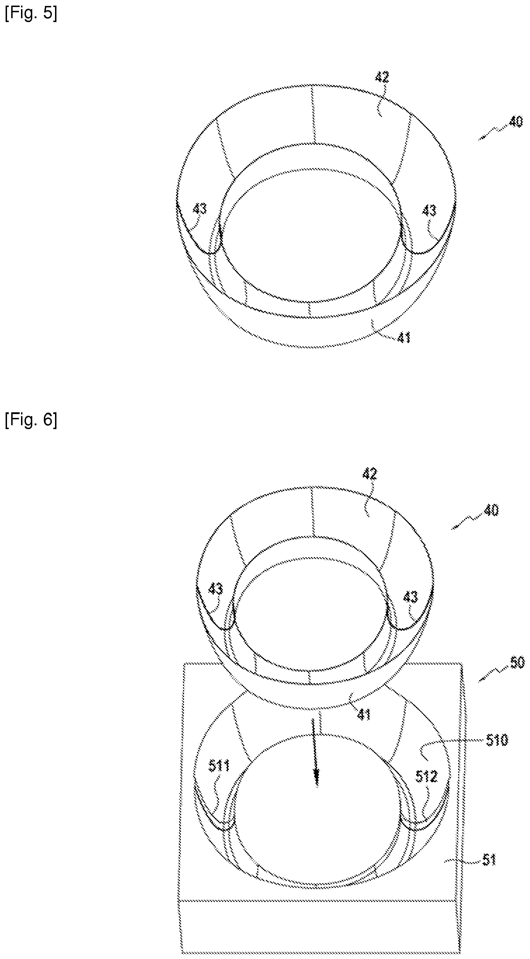

Une fois formé, le cône 30 est préformé, par exemple par repoussage et/ou emboutissage, en une ébauche de lèvre 40 présentant une forme générale proche de celle de la lèvre finale, c'est-à-dire présentant déjà en section une forme de U comme représentée sur la figure 5 (étape S5). L'ébauche 40 comprend deux parties de tôle 41 et 42 correspondant respectivement aux parties 31 et 32 du cône 30 reliées entre elles par deux cordons de soudure 43 correspondants aux cordons de soudure 33 présents sur le cône 30.

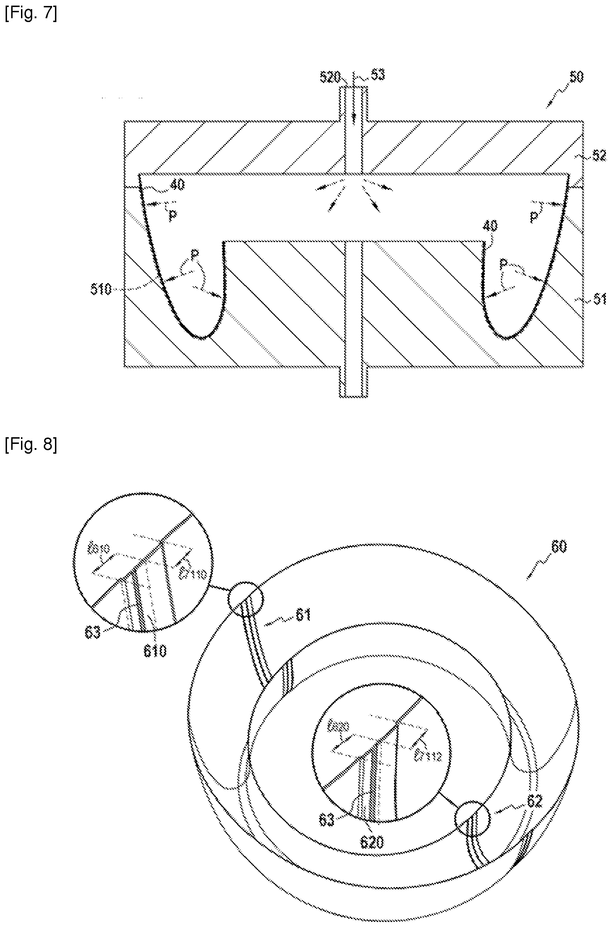

Conformément à l'invention, on procède alors à la mise en forme finale d'une préforme de lèvre d'entrée d'air par hydroformage (étape S6). On entend ici par « hydroformage », tout procédé permettant de déformer plastiquement l'ébauche par l'action d'un fluide sous pression, d'une onde de choc (EletroHydroFormage (EHF), d'un champ magnétique (magnéto-formage), etc. Dans l'exemple décrit ici et comme illustrée sur la figure 6, l'ébauche 40 est placée dans un moule 51, encore appelé matrice, d'un outillage d'hydroformage 50, la matrice 51 comportant une surface tridimensionnelle 510 correspondant à la forme de la préforme de lèvre à obtenir. L'outillage 51 est ensuite fermé hermétiquement par un couvercle 52 comme illustré sur la figure 7. Le couvercle 52 comporte une ouverture 520 à travers laquelle est introduit un fluide 53 sous haute pression. La forte pression P du fluide 53 exercée sur l'ébauche 40 contraint celle-ci à prendre la forme de la surface tridimensionnelle 510 de la matrice 51. Dans l'exemple décrit ici, la surface tridimensionnelle 510 comporte deux nervures ou empreintes de soyage 511 et 512 diamétralement opposées.

Une fois l'hydroformage terminé, on obtient une préforme de lèvre d'entrée d'air 60 en une seule pièce comme illustrée sur la figure 8. La préforme de lèvre d'entrée d'air 60 présente une forme de révolution, par exemple un ellipsoïde de révolution, ayant en section une forme de U et comprend deux cordons de soudure 63 correspondants aux cordons de soudure 43 présents sur l'ébauche 40. La préforme 60 comprend en outre deux portions en créneau 61 et 62 chacune délimitée par une empreinte de soyage 511 ou 512 de la matrice 51.

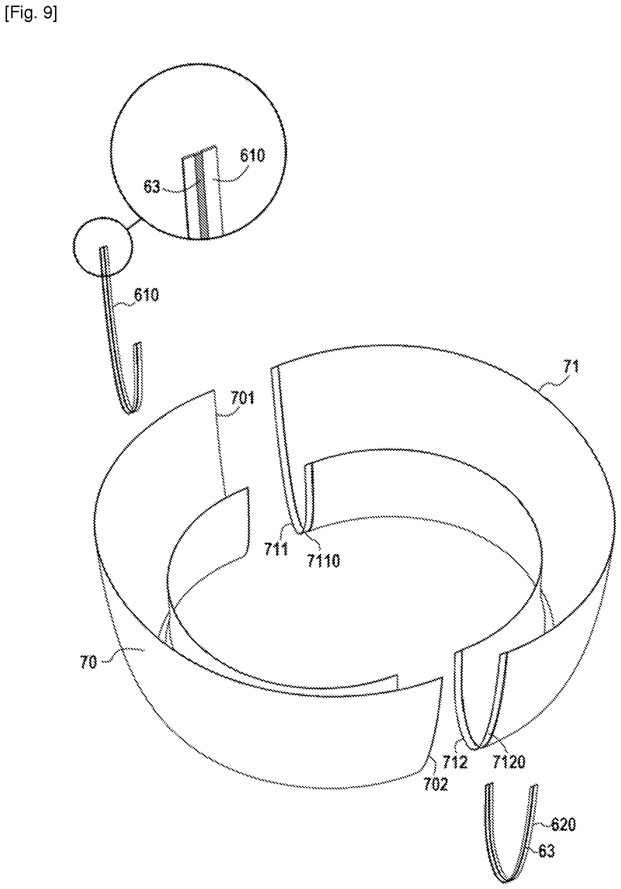

La préforme de lèvre d'entrée d'air en une seule pièce est alors découpée en plusieurs secteurs annulaires (étape S7). Dans l'exemple décrit ici et comme représentée sur la figure 9, la préforme de lèvre d'entrée d'air 60 est découpée en deux secteurs annulaires 70 et 71 de dimensions équivalentes, les découpes étant réalisées au niveau de chaque portion en créneau 61, 62. Comme illustrée sur la figure 8, la découpe des secteurs annulaires au niveau de chaque portion en créneau 61, respectivement 62, comprend le retrait d'une portion sacrificielle 610, respectivement 620. La portion sacrificielle 610, respectivement 620, s'étend sur une largeur déterminée l₆₁₀, respectivement l₆₂₀, depuis une partie de la préforme 60 située en dehors de la portion en créneau 61, respectivement 62, et jusqu'à une position intermédiaire de la portion en créneau 61, respectivement 62. On forme ainsi après chaque découpe un premier bord d'assemblage comportant un soyage correspondant à la partie de la portion en créneau qui n'a pas été retirée et un deuxième bord d'assemblage sans soyage. Sur la figure 9, après la découpe de la préforme 60 comprenant le retrait des portions sacrificielle 610 et 620, on obtient un premier secteur annulaire 70 comportant deux bords d'assemblage 701 et 702 sans soyage et un deuxième secteur annulaire 71 comportant deux bords d'assemblage 711 et 712 muni chacun d'un soyage 7110, 7120. Le bord d'assemblage 701 est destiné à chevaucher le soyage 7110 présent sur le bord d'assemblage 711 adjacent tandis que le bord d'assemblage 702 est destiné à chevaucher le soyage 7120 présent sur le bord d'assemblage 712 adjacent. On entend ici par « soyage », un pliage de la tôle à l'issue duquel on obtient deux plans parallèles décalés d'une distance du même ordre de grandeur que l'épaisseur de la tôle ou plus.

On dispose ainsi d'une pluralité de secteurs annulaires, dans l'exemple décrit ici deux secteurs 70 et 71, qui présentent des dimensions bien adaptées notamment pour le stockage et le transport.

Selon un aspect particulier du procédé de l'invention, on fait coïncider la position des empreintes de soyage avec tout ou partie des cordons de soudure présent sur l'ébauche de lèvre de manière à ce que, après l'hydroformage, le ou les cordons de soudure coïncident avec la position de la ou des portions sacrificielles. Dans l'exemple décrit ici, l'ébauche 40 est placée dans la matrice 51 de l'outillage d'hydroformage de façon à ce que les deux cordons de soudure 43 coïncidents respectivement avec la position des empreintes de soyage 511 et 512 (figure 6). Après hydroformage, les portions en créneau 61 et 62 comprennent chacune un cordon de soudure 63 présent dans la partie des portions 61 et 62 destinée à être retirée, à savoir les portions sacrificielles 610 et 620 (figure 8). Ainsi, le retrait des portions sacrificielles 610 et 620 comprend également le retrait des cordons de soudure 63 (figure 9). On obtient ainsi des secteurs annulaires dépourvus de cordons de soudure, ce qui permet d'obtenir après assemblage une lèvre d'entrée d'air avec un profil aérodynamique régulier.

Dans l'exemple décrit ici, le secteur annulaire 70 ne comporte pas de soyage à ses extrémités tandis que le secteur annulaire 71 comporte un soyage à chacune de ses extrémités. D'autres variantes de réalisation sont bien entendu envisageables comme par exemple prévoir des secteurs annulaires comportant un bord avec soyage à une extrémité et un bord sans soyage à son autre extrémité.

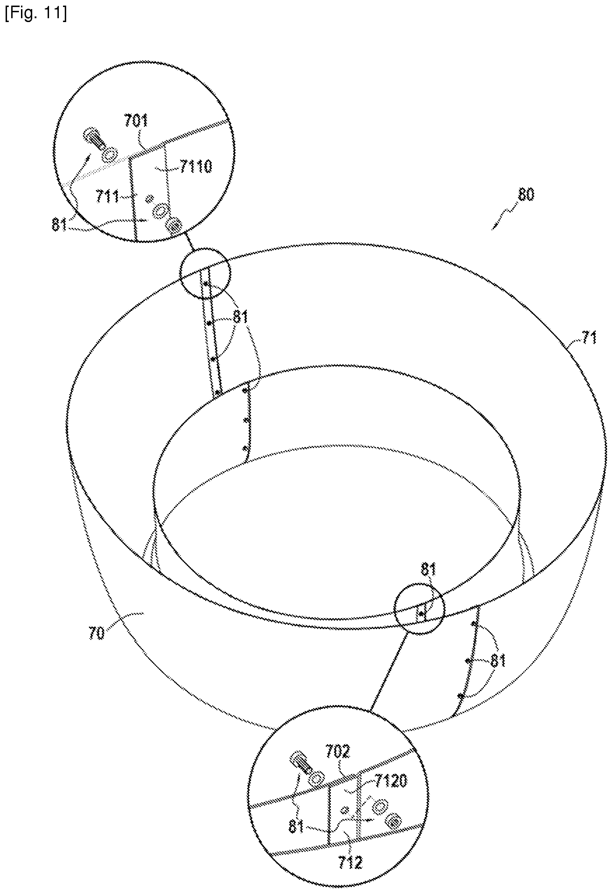

Une fois les secteurs annulaires ainsi réalisés, une lèvre d'entrée d'air peut alors être fabriquée en assemblant les secteurs annulaires entre eux. La figure 11 montre une lèvre d'entrée d'air 80 obtenue par assemblage des secteurs annulaires 70 et 71, le bord d'assemblage 701 du secteur 70 chevauchant le soyage 7110 présent sur le bord d'assemblage 711 adjacent du secteur 71 tandis que le bord d'assemblage 702 chevauche le soyage 7120 présent sur le bord d'assemblage 712 adjacent du secteur 71. Il n'y a pas de problème d'ajustement entre les bords adjacents d'assemblage car ceux-ci ont été réalisés dans une même pièce (préforme 60) et présentent, par conséquent, des géométries et dimensions correspondantes. Une fois ajustés les uns avec les autres, les bords d'assemblage adjacents sont fixés avec des organes de liaison 81 de préférence amovibles, par exemple du type vis-boulon.

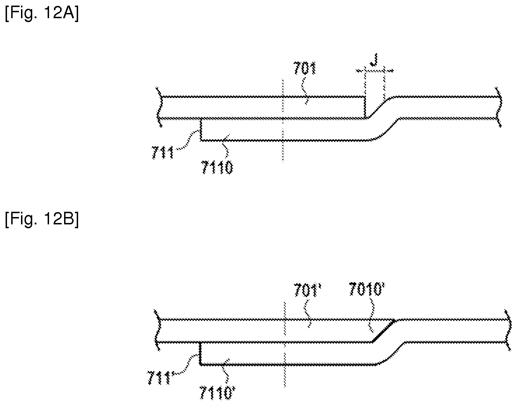

La découpe des portions sacrificielles peut être réalisée perpendiculairement à la surface de la pièce. Dans ce cas, comme illustrée sur la figure 12A, un jeu résiduel J est présent entre l'extrémité du bord d'assemblage 701 et le rayon du soyage 7110 présent sur le bord d'assemblage 711. Comme illustré sur la figure 12B, ce jeu résiduel peut être réduit en découpant un biseau 7010' sur le bord d'assemblage 701' qui épouse la forme du rayon du soyage 7110' présent sur le bord d'assemblage 711'.

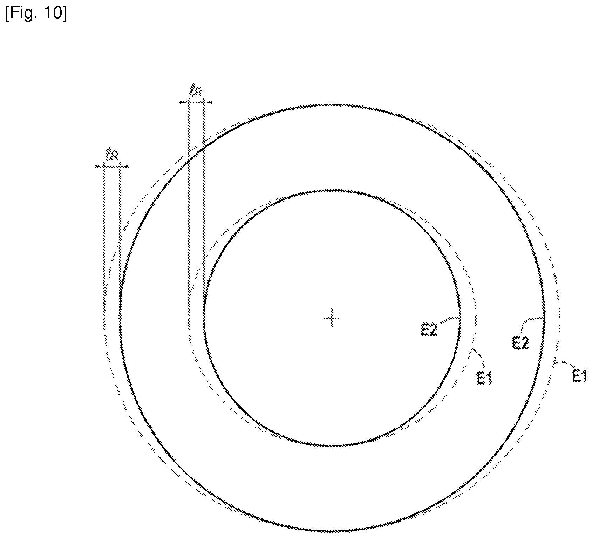

La géométrie et/ou les dimensions de la lèvre d'entrée d'air varie par rapport à la géométrie et/ou les dimensions de la préforme de lèvre d'entrée d'air en raison du retrait d'une portion sacrificielle au niveau de chaque découpe (longueurs l₆₁₀ et l₆₂₀ sur la figure 8) et du chevauchement des bords d'assemblage soyés avec les bords d'assemblages non soyés (l₇₁₁₀ et l₇₁₂₀ sur la figure 8). Par conséquent, la géométrie et les dimensions de la surface tridimensionnelle 510 de la matrice 51 sont adaptées en fonction de la géométrie et des dimensions de la lèvre d'entrée d'air finale que l'on souhaite obtenir. Si l'on souhaite obtenir une lèvre d'entrée d'air de forme ovale, on utilisera une matrice dont la surface tridimensionnelle présente une forme d'ellipse ayant un diamètre supérieure à celle de la forme finale de la lèvre d'entrée d'air comme sur la figure 10 qui montre schématiquement une première forme en ellipse E1 correspondant à la préforme de lèvre d'entrée d'air et une deuxième forme en ellipse E2 correspondant à la lèvre d'entrée d'air finale. La différence de dimensions I_{R} entre les formes en ellipse E1 et E2 correspond à la prise en compte du retrait des portions sacrificielles et du chevauchement des bords adjacents des secteurs assemblés.

Si l'on souhaite obtenir une lèvre d'entrée d'air de forme circulaire, on utilisera une matrice dont la surface tridimensionnelle présente des portions de cercle correspondant aux secteurs annulaires et des sur-longueurs entre les portions de cercles correspondant aux parties sacrificielles devant être retirées lors de la découpe des secteurs.

## Revendications

1. Procédé de fabrication de secteurs annulaires d'une lèvre d'entrée d'air (70, 71) comprenant :
- le placement d'une ébauche de forme de révolution (40) en regard d'une surface tridimensionnelle de formage (510) d'une matrice d'un outillage d'hydroformage (51), la surface tridimensionnelle comprenant au moins deux empreintes de soyage (511, 512) espacées l'une de l'autre suivant une direction circonférentielle,
- le formage d'une préforme de lèvre d'entrée d'air (60) en une seule pièce par hydroformage de l'ébauche de forme de révolution (40) sur la surface tridimensionnelle (510) de la matrice (51), la préforme de lèvre d'entrée d'air présentant en section une forme de U et comprenant une pluralité de portions en créneau (61, 62) chacune délimitée par une empreinte de soyage,
- la réalisation d'une pluralité de découpes dans la préforme de lèvre d'entrée d'air (60) de manière à diviser ladite préforme en une pluralité de secteurs annulaires (70, 71), chaque découpe comprenant le retrait d'une portion sacrificielle (610, 620) au niveau d'une portion en créneau de manière à former deux bords d'assemblage adjacents (701, 711) avec un (711) des deux bords d'assemblage adjacents comportant un soyage (7110).

2. Procédé selon la revendication 1, dans lequel la surface tridimensionnelle de formage (510) présente une forme d'ellipse ayant un diamètre déterminé en fonction de la forme finale de la lèvre d'entrée d'air (80).

3. Procédé selon la revendication 1 ou 2, dans lequel l'ébauche de forme de révolution (40) est formée d'une pluralité de parties de tôle (41, 42) assemblées entre elles par des cordons de soudure (43) et dans lequel l'ébauche de forme de révolution est placée en regard de la surface tridimensionnelle de formage (510) de la matrice (51) de manière à ce que la position d'au moins une partie des cordons de soudure coïncide avec la position de portions sacrificielles (610, 620).

4. Procédé de fabrication d'une lèvre d'entrée d'air comprenant la réalisation de secteurs annulaires de lèvre d'entrée d'air (70, 71) selon l'une quelconque des revendications 1 à 3 et l'assemblage desdits secteurs par chevauchement entre les bords adjacents d'assemblage (701, 711 ; 702, 712) et fixation desdits bords d'assemblage adjacents entre eux de manière à obtenir une lèvre d'entrée d'air (80).

5. Procédé selon l'une quelconque des revendications 1 à 4, dans lequel la fixation des bords d'assemblage adjacents (701, 711 ; 702, 712) est réalisée avec des organes de liaison démontables (81).

## Patentansprüche

1. Verfahren zur Herstellung von ringförmigen Sektoren einer Lufteinlasslippe (70, 71), umfassend:
- die Platzierung eines rotationssymmetrischen Formrohlings (40) gegenüber einer dreidimensionalen Formungsoberfläche (510) einer Matrize eines Hydroformungswerkzeugs (51), wobei die dreidimensionale Oberfläche zumindest zwei Sickenprägungen (511, 512) umfasst, die in Umfangsrichtung voneinander beabstandet sind,
- die Formung einer einteiligen Lufteinlasslippen-Vorform (60) durch Hydroformen des rotationssymmetrischen Formrohlings (40) auf der dreidimensionalen Oberfläche (510) der Matrize (51), wobei die Lufteinlasslippen-Vorform im Querschnitt U-förmig ist und mehrere Zackenabschnitte (61, 62) umfasst, die jeweils durch eine Sickenprägung begrenzt sind,
- die Verwirklichung mehrerer Schnitte in der Lufteinlasslippen-Vorform (60), um die Vorform in mehrere ringförmige Sektoren (70, 71) zu unterteilen, wobei jeder Schnitt das Entfernen eines Opferabschnitts (610, 620) an einem Zackenabschnitt umfasst, um zwei benachbarte Verbindungskanten (701, 711) zu bilden, wobei eine (711) der zwei benachbarten Verbindungskanten eine Sickenprägung (7110) beinhaltet.

2. Verfahren nach Anspruch 1, wobei die dreidimensionale Formungsoberfläche (510) die Form einer Ellipse aufweist, die einen Durchmesser hat, der in Abhängigkeit von der endgültigen Form der Lufteinlasslippe (80) bestimmt wird.

3. Verfahren nach Anspruch 1 oder 2, wobei der rotationssymmetrische Formrohling (40) aus mehreren Blechteilen (41, 42) gebildet wird, die durch Schweißnähte (43) miteinander verbunden sind, und wobei der rotationssymmetrische Formrohling gegenüber der dreidimensionalen Formungsoberfläche (510) der Matrize (51) so platziert wird, dass die Position von mindestens einem Teil der Schweißnähte mit der Position von Opferabschnitten (610, 620) zusammenfällt.

4. Verfahren zur Herstellung einer Lufteinlasslippe, umfassend das Herstellen von ringförmigen Lufteinlasslippen-Sektoren (70, 71) nach einem der Ansprüche 1 bis 3 und das Verbinden der Sektoren durch Überlappung zwischen benachbarten Verbindungskanten (701, 711; 702, 712) und Befestigung der Verbindungskanten untereinander auf eine Weise, um eine Lufteinlasslippe (80) zu erhalten.

5. Verfahren nach einem der Ansprüche 1 bis 4, wobei die Befestigung von benachbarten Verbindungskanten (701, 711; 702, 712) durch abnehmbare Verbindungselemente (81) verwirklicht wird.

## Claims

1. A method for manufacturing annular sectors of an air intake lip (70, 71) comprising:
- the arrangement of a revolution-shaped blank (40) facing a three-dimensional forming surface (510) of a die of a hydroforming tool (51), the three-dimensional surface comprising at least two plunging cavities (511, 512) spaced from each other along a circumferential direction,
- the forming of an air intake lip preform (60) in one piece by hydroforming the revolution-shaped blank (40) on the three-dimensional surface (510) of the die (51), the air intake lip preform having in section a U-shape and comprising a plurality of crenellated portions (61, 62) each delimited by a plunging cavity,
- the production of a plurality of cutouts in the air intake lip preform (60) so as to divide said preform into a plurality of annular sectors (70, 71), each cutout comprising the removal of a sacrificial portion (610, 620) at the level of a crenellated portion so as to form two adjacent assembly edges (701, 711) with one (711) of the two adjacent assembly edges including a plunging (7110).

2. The method according to claim 1, wherein the three-dimensional forming surface (510) has the shape of an ellipse with a diameter determined according to the final shape of the air intake lip (80).

3. The method according to claim 1 or 2, wherein the revolution-shaped blank (40) is formed of a plurality of sheet metal parts (41, 42) assembled together by weld beads (43) and wherein the revolution-shaped blank is arranged facing the three-dimensional forming surface (510) of the die (51) so that the position of at least part of the weld beads coincides with the position of sacrificial portions (610, 620).

4. A method for manufacturing an air intake lip comprising the production of annular air intake lip (70, 71) sectors according to any one of claims 1 to 3 and the assembly of said sectors by overlapping between the adjacent assembly edges (701, 711; 702, 712) and fixing of said adjacent assembly edges together so as to obtain an air intake lip (80).

5. The method according to any one of claims 1 to 4, wherein the fixing of the adjacent assembly edges (701, 711; 702, 712) is carried out with dismountable connecting members (81).
